# EUROPÄISCHE PATENTSCHRIFT

(11) **EP 0 942 817 B1**
(45) Veröffentlichungstag und Bekanntmachung des Hinweises auf die Patenterteilung: **12.09.2001**
(21) Anmeldenummer: 97945657.1
(22) Anmeldetag: 26.11.1997
(51) Int. Cl.: B29C 39/16

(54) **VORRICHTUNG ZUM HERSTELLEN VON FORMTEILEN**
DEVICE FOR PRODUCING MOLDED PARTS
DISPOSITIF POUR LA FABRICATION DE PIECES MOULEES

(30) Priorität: 27.11.1996 AT 206196
(43) Veröffentlichungstag der Anmeldung: 22.09.1999
(73) Patentinhaber: Polytech Klepsch & Co. GmbH, 1210 Wien (AT)
(72) Erfinder: KLEPSCH, Rudolf, A-1210 Wien (AT)
(74) Vertreter: Wildhack, Helmut, Dr. Dipl.-Ing.
(86) Internationale Anmeldenummer: AT9700258
(87) Internationale Veröffentlichungsnummer: WO9823426

(56) Entgegenhaltungen:
- WO-A-85/05314
- FR-A- 1 570 106
- US-A- 3 376 371
- US-A- 5 167 781
- US-A- 5 372 493

## Beschreibung

Die Erfindung betrifft eine Vorrichtung zum Herstellen von Formteilen aus Kunststoff, beispielsweise von Platten, Profilen od. dgl., mit zwei eine Form bildenden, parallel zueinander und in Abstand voneinander angeordneten umlaufenden Förderbändern und einer in den Einlaufspalt zwischen den Förderbändern mündenden Verteileinrichtung, welcher über eine Leitung flüssiges Kunststoffmaterial zugeführt wird, das sich zwischen den umlaufenden Förderbändern zum Formteil verfestigt.

Es ist bereits bekannt, Formteile aus Kunststoff durch Vermischen von zwei in gesonderten Kesseln befindlichen Monomerkomponenten, insbesondere Caprolactamschmelzen, welche mit einem Aktivator oder Katalysator versetzt und auf geeignete Temperatur gebracht sind, herzustellen. Die Monomerkomponenten werden hiebei in flüssigem Zustand in entsprechend temperierte Formen gegossen und dort drucklos auspolymerisiert. Nachteilig ist bei diesem bekannten Verfahren, daß keine kontinuierliche Herstellung der Formteile erfolgt, sodaß die Abmessungen, abhängig von der Größe der Formen, in welche die flüssigen Monomerkomponenten gegossen werden, beschränkt sind. Da solche Formen nicht in einer großen Anzahl verschiedener Abmessungen bereitgehalten werden können, müssen die derart hergestellten Formteile nachträglich bearbeitet, insbesondere auf die gewünschte Größe zugeschnitten werden, wodurch unverwertbare Abfälle entstehen. Außerdem bilden sich bei diesem bekannten Verfahren, ähnlich wie beim Metallguß in der Regel auf den obenliegenden Flächen sogenannte verlorene Köpfe, die nach dem Auspolymerisieren vom Formteil abgetrennt werden müssen, was ebenfalls einen zusätzlichen Arbeitsvorgang notwendig macht und die Entstehung weiterer Abfälle mit sich bringt.

Aus der US-A-5,372,493 ist eine Vorrichtung zum kontinuierlichen Herstellen von Formteilen bekannt geworden, bei welchem eine reaktionsfähige Mischung zwischen zwei schräg und in einem parallelen Abstand zueinander angeordneten umlaufenden Bändern ausgehärtet wird. Die Reaktionsmischung wird dabei durch eine Verteileinrichtung zwischen die Bänder eingebracht. Als Reaktionsmischung wird hiebei ein ungesättigtes vernetztes Polymer verwendet.

Die vorliegende Erfindung hat sich zur Aufgabe gestellt, eine Vorrichtung zum Herstellen von Formteilen zu schaffen, welche bei Verwendung von Caprolactamschmelzen eine kontinuierliche Herstellung und auf einfache Weise eine Anpassung an die gewünschten Abmessungen der herzustellenden Formteile ermöglicht, sodass die Entstehung von Abfällen vermieden wird und der Arbeitsaufwand bei der Herstellung verringert und vereinfacht wird. Zur Lösung dieser Aufgabe schlägt die Erfindung vor, dass zumindest zwei jeweils eine Caprolactamschmelze enthaltende Behälter vorgesehen sind, welche über gesonderte Leitungen mit einer vor der Verteileinrichtung vorgesehenen Mischeinrichtung verbunden sind. Die erfindungsgemäße Ausbildung macht es möglich, eine aus US-A-5,372,493 bekannte Vorrichtung auch bei Verwendung von Caprolactamschmelzen einzusetzen, wenn die in den verschiedenen Behältern angeordneten Caprolactamschmelzen unmittelbar vor der Verteileinrichtung miteinander vermischt werden und dann diese Mischung dem Einlaufspalt zwischen den Förderbändern zugeführt wird. Dadurch wird der Produktionsablauf wesentlich vereinfacht und insbesondere auch eine Anpassung an verschiedene herzustellende Formate der Formteile ermöglicht.

Vorzugsweise ist die Mischeinrichtung in einem der Verteileinrichtung vorgeschalteten Gießventil vorgesehen, über welches die Menge des über die Verteileinrichtung zugeführten Kunststoffmateriales eingestellt und damit an den jeweiligen Bedarf angepasst werden kann.

Gemäß einer bevorzugten Ausführungsform der Erfindung ist im Bereich der beiden Längsränder wenigstens eines Förderbandes ein Dichtungskörper, beispielsweise aus Silikongummi, vorgesehen. Dieser Dichtungskörper kann z.B. aus einem zusammendrückbaren, elastischen Hohlprofil gebildet sein, das sich infolge der Elastizität an verschieden große Abstände zwischen den beiden Förderbändern anzupassen vermag. Durch Veränderung der Lage der Dichtungskörper auf dem Förderband kann ohne Schwierigkeiten die Breite der herzustellenden Formkörper geändert werden. Die erfindungsgemäße Vorrichtung ermöglicht es somit, auf einfache Weise sowohl die Dicke als auch die Breite der herzustellenden Formkörper zu variieren.

Um eine einfache Veränderung der Lage der Dichtungskörper zu ermöglichen, liegen diese gemäß einem weiteren Merkmal der Erfindung lose am Förderband auf und sind durch an ihren Außenseiten anliegende Stützbänder in ihrer Lage fixiert, welche sich gegen am Förderband befestigte Führungen, vorzugsweise in Form von Nieten, abstützen. Um die Lage der Dichtungskörper zu verändern, müssen lediglich die Stützbänder ausgetauscht werden, wobei diese Stützbänder auch dazu dienen, ein seitliches Durchbiegen der elastischen Dichtungskörper zu verhindem und damit eine exakte seitliche Begrenzung der herzustellenden Formteile sicherzustellen.

Bei der Herstellung von plattenförmigen Formteilen wird das flüssige Kunststoffmaterial über die Verteileinrichtung direkt dem Einlaufspalt zwischen den Förderbändern zugeleitet, wobei die Gestalt der plattenförmigen Formteile durch den Abstand zwischen den Förderbändern und den Abstand zwischen den Dichtungskörpern bestimmt ist. Die vorliegende Erfindung ermöglicht aber auch die Herstellung von Formteilen, die nicht plattenförmig sind, also beispielsweise von Profilen mit rundem oder eckigem Querschnitt. Um derartige Profile herzustellen, können erfindungsgemäß zwischen den beiden Förderbändern zweiteilige Formprofile, vorzugsweise aus Silikongummi, mit den herzustellenden Profilen entsprechenden Hohlräumen angeordnet werden, wobei ein Teil auf dem oberen Förderband und ein Teil auf dem unteren Förderband abgestützt ist. Jeder Formprofilteil ist endlos und läuft mit einem der beiden Förderbänder um, wobei nach dem Einlaufspalt eine geschlossene, die Hohlräume bildende Form entsteht. Die Fixierung der Formprofile gegen seitliche Verschiebung kann wieder über die am Förderband befestigten Führungen erfolgen.

Die Verteileinrichtung besteht zweckmäßig aus einem in den Einlaufspalt mündenden Rohrsystem. Ist der Einlaufspalt zwischen den beiden Förderbändern bei Herstellung dickerer Platten entsprechend groß, so ist es möglich, daß sich die Verteileinrichtung bis in den Zwischenraum zwischen die beiden Förderbänder erstreckt, ohne diese zu berühren, in welchem Fall keine weiteren seitlichen Begrenzungen erforderlich sind. Bei kleinem Einlaufspalt hingegen ist es nicht möglich, die vom Rohrsystem gebildete Verteileinrichtung zwischen die beiden Förderbänder hineinragen zu lassen, ohne daß eine Berührung mit den Förderbändern erfolgt. In diesem Fall müssen zur seitlichen Begrenzung des Einlaufspaltes feststehende, vorzugsweise dreieckförmige, Dichtungsprofile vorgesehen sein.

Zweckmäßig ist es, wenn die Verteileinrichtung Meßkontakte für die Menge des dem Einlaufspalt zugeführten flüssigen Kunststoffmaterials aufweist, wobei die Meßkontakte vorzugsweise mit dem Gießventil in Wirkverbindung stehen. In diesem Fall erfolgt die Regelung der Zufuhr des flüssigen Kunststoffmaterials über das Gießventil in Abhängigkeit von der dem Einlaufspalt zugeführten Menge des flüssigen Kunststoffmaterials, d.h. bei Erreichen der Maximalmenge schließt das Gießventil und bei Erreichen der Minimalmenge öffnet das Gießventil. Bei einer derartigen Steuerung erfolgt der Antrieb der Förderbänder mit konstanter, genau auf die Rezeptur abgestimmter Geschwindigkeit. Es kann aber auch das Gießventil stets geöffnet sein, sodaß konstant eine bestimmte Menge des flüssigen Kunststoffmaterials dem Einlaufspalt zugeführt wird, wobei in diesem Fall der Antrieb der Förderbänder über die Meßkontakte gesteuert wird.

Für das Verfestigen bzw. die Polymerisation des zugeführten Kunststoffmateriales ist eine entsprechend hohe Formtemperatur erforderlich. Es ist daher erfindungsgemäß im Bereich des Einlaufspaltes eine Heizeinrichtung, vorzugsweise elektrische Heizstrahler, vorgesehen, über welche Heizeinrichtung die erforderliche Polymerisationstemperatur sichergestellt wird. Damit diese Temperatur aufrechterhalten wird, sind gemäß einem weiteren Merkmal der Erfindung die Förderbänder in einer Kammer angeordnet, die eine an der einen Stirnseite im Bereich der Verteileinrichtung vorgesehene Einlaßöffnung und an der gegenüberliegenden Stimseite eine Austrittsöffnung für den Formteil bzw. die Formteile aufweist. Die Heizeinrichtung ist hiebei vorzugsweise außerhalb der Kammer angeordnet, wobei die der Heizeinrichtung benachbarte Kammerwand ein wärmestrahlendurchlässiges Fenster, beispielsweise aus Glaskeramik, aufweist. Dadurch wird eine Explosionsgefahr des Caprolactamdampfes, die bei Auftreten von hohen Temperaturen gegeben ist, beseitigt.

Eine gleichmäßige Temperatur wird dann erzielt, wenn die Kammer im Bereich der beiden Stirnseiten mit Luftöffnungen versehen ist, die über eine außerhalb der Kammer vorgesehene Luftzirkulationsleitung, in der vorzugsweise ein Gebläse eingeschaltet ist, in Verbindung stehen.

Um ein allenfalls im Bereich der Dichtungskörper, welche die seitliche Begrenzung der hauptsächlich von den Förderbändern gebildeten Form darstellen, austretendes flüssiges Kunststoffmaterial abzuführen, sind unterhalb der Längsränder des unteren Förderbandes Auffangrinnen für ein solches austretendes flüssiges Kunststoffmaterial vorgesehen, die in einen mit der Kammer verbundenen Auffangbehälter münden.

Um ein unerwünschtes Durchbiegen der Förderbänder beim Verfestigungs- bzw. Polymerisationsvorgang zu verhindern und um somit eine gleichmäßige Dicke der herzustellenden Formteile sicherzustellen, sind gemäß einer bevorzugten Ausführungsform der Erfindung die Förderbänder auf Tafeln, vorzugsweise aus rostfreiem Stahlblech, gleitend abgestützt. Diese Tafeln können mit Luftdurchtrittsöffnungen versehen sein, durch welche Druckluft zugeführt werden kann, welche das Entstehen eines Luftpolsters zwischen dem Förderband und der dieses abstützenden Tafel bewirkt, wodurch die Reibungsverluste reduziert werden.

Vorzugsweise sind ein an die Austrittsöffnung der Kammer anschließender Rollenabzug sowie eine quer zur Vorschubrichtung des Rollenabzuges bewegbare Trenneinrichtung vorgesehen. Der Rollenabzug gewährleistet eine Abfuhr der verfestigten, aus dem Austrittsspalt der Förderbänder austretenden Formteile und durch die Trenneinrichtung werden diese automatisch auf das erforderliche Maß abgelängt.

Wesentlich ist es, daß die Förderbänder die bei der Polymerisation auftretenden hohen Temperaturen bis zu 190°C aushalten und weiters vollkommen eben sind, also auch an der Stoßstelle keine Erhebung aufweisen, welche die Oberflächengestaltung der herzustellenden Formteile beeinträchtigen würde. Diese Förderbänder bestehen daher zweckmäßig aus einem endlos hergestellten Gewebe- oder Kunststoffband, das vorzugsweise mit einer Beschichtung aus Polytetrafluoräthylen versehen ist, oder aus einem an der Stoßstelle stumpf geschweißten Stahlband.

Die erfindungsgemäße Vorrichtung ermöglicht auch die Herstellung von plattenförmigen Formteilen aus Kunststoff, insbesondere aus Polyamid, die an ihren Oberflächen mit einer Deckschicht aus einer Metallfolie od.dgl. versehen sind, und zwar in einem einzigen Arbeitsvorgang. Derartige, mit einer Deckschicht aus einer Metallfolie od.dgl. versehene Kunststoffplatten sind bereits bekannt, haben sich jedoch in der Praxis trotz großer Vorteile nicht durchsetzen können, weil die Aufbringung der Deckschicht auf die Kunststoffplatten bisher in einem gesonderten Arbeitsvorgang in einer Presse unter Vermittlung eines Klebemittels erfolgte und daher umständlich und teuer war. Erfindungsgemäß kann nun oberhalb des oberen Förderbandes und/oder unterhalb des unteren Förderbandes eine Abwickeleinrichtung für ein am Förderband anliegendes und sich mit dem Förderband mitbewegendes Metallband, beispielsweise eine Aluminiumfolie oder eine Stahlfolie, vorgesehen sein, das somit durch das sich bewegende Förderband in den Einlaufspalt eingezogen wird. Wird dann durch die Verteileinrichtung das flüssige Kunststoffmaterial in den Einlaufspalt eingebracht, so verbindet es sich bei der Polymerisation, die zwischen den beiden Förderbändern erfolgt, mit diesem Kunststoffmaterial, wobei insbesondere dann, wenn als Kunststoffmaterial Gußpolyamid 6 oder ein PA-Kautschuk-Blockcopolymer eingesetzt wird, eine hervorragende Haftung zwischen dem Kunststoffmaterial und den Deckschichten erzielt wird.

Die mittels der erfindungsgemäßen Vorrichtung hergestellten Formteile können auch faserverstärkt werden. Zu diesem Zweck kann erfindungsgemäß wenigstens einer der Behälter, in dem sich das Monomer befindet, mit einer Einrichtung für die Beimengung von Verstärkungsfasern, beispielsweise Glasfasern, Kohlenstofffasern und/oder Aramidfasem, verbunden sein und vorzugsweise mit einer Mischeinrichtung versehen sein, über welche eine gute Vermischung zwischen den eingebrachten Fasern und dem Monomer erfolgt.

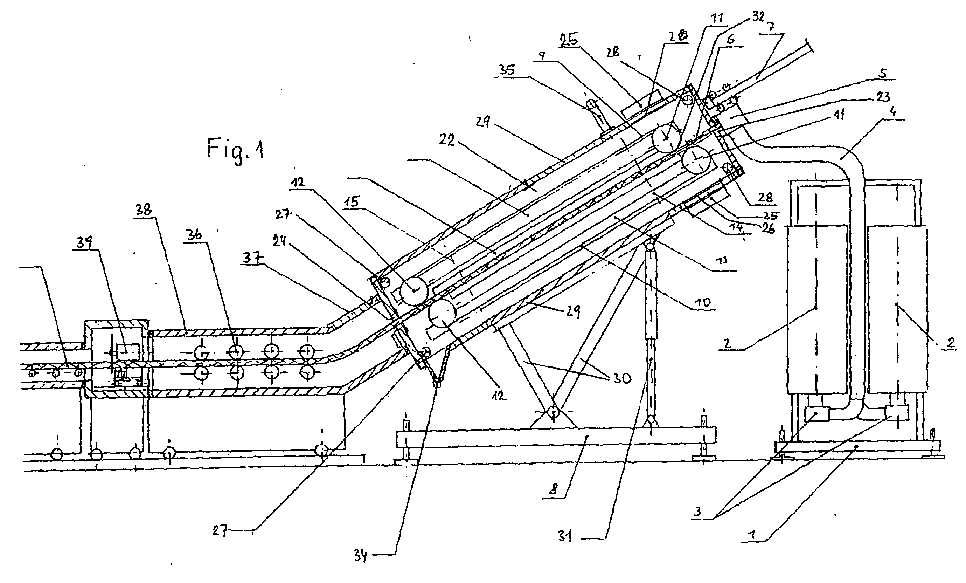

In der Zeichnung ist die Erfindung anhand eines Ausführungsbeispieles schematisch erläutert. Fig. 1 zeigt einen Längsschnitt durch eine erfindungsgemäße Vorrichtung. Die Fig. 2 und 3 stellen in vergrößertem Maßstab Querschnitte durch die Förderbänder der erfindungsgemäßen Vorrichtung dar.

Die in der Zeichnung dargestellte erfindungsgemäße Vorrichtung weist zwei auf einem Gestell 1 gelagerte Behälter 2 auf, die jeweils eine der beiden Monomerkomponenten, aus welchem der Formteil gefertigt werden soll, enthalten. Beispielsweise ist in einem der beiden Behälter Caprolactamschmelze mit einem Aktivator, im anderen der beiden Behälter Caprolactamschmelze mit einem Katalysator enthalten. Zweckmäßig ist es, mehrere Behälterpaare vorzusehen, wodurch der Vorteil erzielt wird, daß bei einem Leerwerden eines Behälterpaares ohne Produktionsunterbrechung auf das andere Behälterpaar umgeschaltet werden kann und das leere Behälterpaar dann neu gefüllt wird, wobei gegebenenfalls Zusätze beigegeben werden und die Gießtemperatur neu eingestellt wird. Ein weiterer Vorteil bei der Anordnung mehrerer Behälterpaare ist darin gelegen, daß eine Umschaltung auf ein Behälterpaar vorgenommen werden kann, das einen anderen Farbzusatz enthält, sodaß ohne Produktionsunterbrechtung verschieden gefärbte Formteile angefertigt werden können.

Wenn mit der erfindungsgemäßen Vorrichtung faserverstärkte Formteile gefertigt werden sollen, so ist zumindest einer der beiden Behälter 2 mit einer nicht dargestellten Einrichtung für die Beimengung von Verstärkungsfasem, beispielsweise Glasfasern, Kohlenstofffasem und/oder Aramidfasern verbunden. Die so diesem Behälter zugeführten Verstärkungsfasern werden zweckmäßig mit der im Behälter befindlichen Monomerkomponente mittels einer gleichfalls nicht dargestellten üblichen Mischvorrichtung vermengt.

Aus den beiden Behältern 2 gelangen die flüssigen Monomerkomponenten mittels Dosierpumpen 3 und beheizter Förderleitungen 4 zu einem Gießventil 5, über das eine Verteileinrichtung 6 gespeist wird, wo die beiden Monomerkomponenten miteinander vermischt werden. Das Gießventil 5 und die Verteileinrichtung 6 sind auf einer Führung 7 mittels Rollen verschiebbar geführt, sodaß die Verteileinrichtung 6 in eine Lage verschoben werden kann, in welcher sie gereinigt und zwecks Anpassung an verschieden breite herzustellende Formteile ausgewechselt werden kann.

Über die Verteileinrichtung 6 wird das aus den beiden miteinander vermischten Monomerkomponenten gebildete flüssige Kunststoffmaterial, also die aktivierte Schmelze dem Einlaufspalt zwischen zwei auf einem Sockel 8 gelagerten, parallel zueinander und in Abstand voneinander angeordneten, umlaufenden Förderbändern 9,10 zugeführt. Die beiden Förderbänder 9,10 laufen jeweils über Umlenkrollen 11,12, wobei eine der beiden Rollen jedes Förderbandes stufenlos regelbar angetrieben ist. Die jeweils andere der beiden Umlenkrollen ist mit einer Spannvorrichtung versehen, durch welche die Förderbänder 9,10 gespannt gehalten werden.

Das untere Förderband 10 ist mit seinen. Umlenkrollen 11,12 in einem Rahmen 13 fest gelagert, wogegen die Lagerung des oberen Förderbandes 9 gegenüber dem unteren Förderband 10 stufenlos mittels lediglich angedeuteter Hubspindelpaare 14,15 verstellt werden kann und dadurch der Abstand zwischen den beiden Förderbändern und damit die Größe des Einlaufspaltes geändert und an die Dicke des herzustellenden Formteiles angepaßt werden kann. Bedingt durch die Schrumpfung beim Verfestigen muß das hintere Hubspindelpaar 15 jeweils auf eine geringere Dicke eingestellt werden.

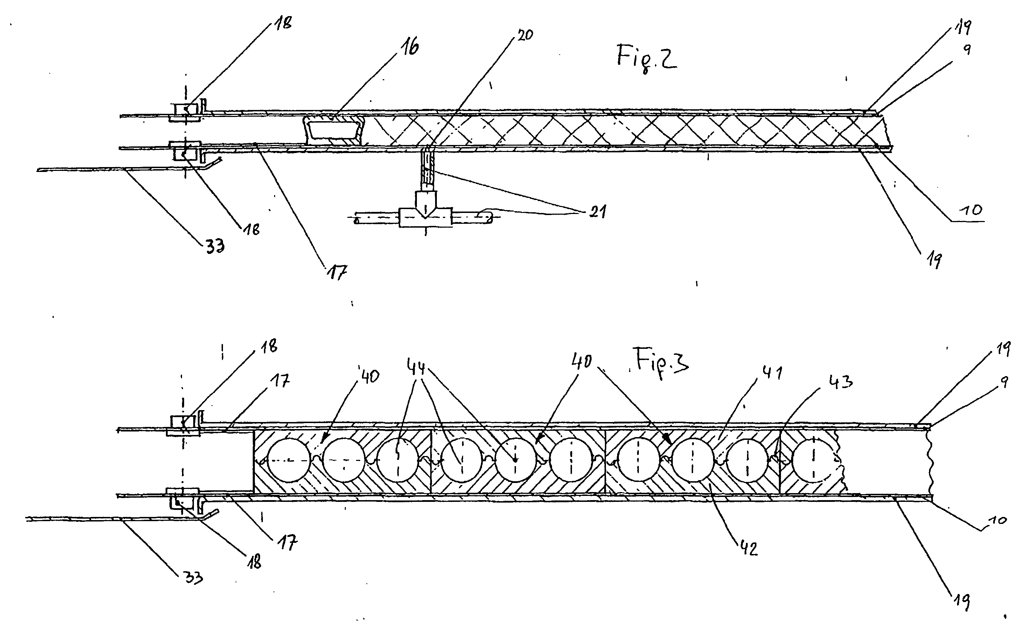

Wie aus Fig. 2 hervorgeht, erfolgt die seitliche Abdichtung zwischen den beiden Förderbändern 9,10 im Bereich deren Längsränder durch Dichtungskörper 16, beispielsweise in Form von Silikongummiprofilen, die lose an den Förderbändern 9,10 aufliegen und durch Stützbänder 17 in ihrer Lage gehalten sind. Die Dichtungskörper 16 werden stumpf verklebt, sodaß die Stoßstelle keinen störenden Einfluß auf die Dichtwirkung ausübt. Die Stützbänder 17 stützen sich gegen am Förderband 9 bzw. 10 befestigte Führungen 18 in Form von Nieten ab. Der Abstand zwischen den beiden Dichtungskörpem definiert die Breite des herzustellenden Formteiles, durch entsprechende Veränderung der Lage dieser Dichtungskörper kann somit diese Breite eingestellt werden, wobei durch Austausch der Stützbänder 17 die Beibehaltung des jeweiligen Abstandes zwischen den Dichtungskörpern gewährleistet ist. Durch Austausch der Dichtungskörper 16 können diese dem eingestellten Abstand zwischen den beiden Förderbändern 9,10 angepaßt werden, wobei infolge der Elastizität der Dichtungskörper eine Veränderung des Abstandes zwischen den Förderbändern 9,10 innerhalb gewisser Grenzen ohne Austausch der Dichtungskörper erfolgen kann. Der Austausch der Dichtungskörper 16 und der Stützbänder 17 erfolgt auf einfache Weise durch seitliches Abziehen von den Förderbändern.

Sollen mit der erfindungsgemäßen Vorrichtung Formteile aus Kunststoff hergestellt werden, die mit Deckschichten aus Aluminiumfolien oder Stahlfolien versehen sind, so können oberhalb des oberen Förderbandes 9 und unterhalb des unteren Förderbandes 10 nicht dargestellte Abwickeleinrichtungen für ein Metallband vorgesehen sein. Die von der Abwickeleinrichtung abgezogenen Metallbänder sind so geführt, daß sie am jeweiligen Förderband 9 bzw. 10 anliegen und somit über das Förderband abgezogen und mittels des Förderbandes weiterbewegt werden, wobei bei einer Verfestigung bzw.- Polymerisation des Kunststoffmaterials zwischen den Förderbändern eine Verbindung zwischen dem Kunststoffmaterial und den Metallfolien bei hervorragender Haftung erzielt wird.

Wie weiters aus Fig. 2 hervorgeht, werden die Förderbänder 9,10 in jenem Bereich, in welchem die Verfestigung bzw. Polymerisation des Kunststoffmaterials erfolgt, auf Tafeln 19 aus rostfreiem Stahlblech gleitend abgestützt. Die Tafeln 19 liegen, um die verschiedenen Wärmedehnungen auszugleichen, gleitend auf einer Stützkonstruktion auf, die über eine Wärmeisolierung mit einer Unterkonstruktion verbunden ist.

Um die Reibungsverluste zwischen den sich bewegenden Förderbändern 9,10 und den feststehenden Tafeln 19 zu minimieren, sind in den Tafeln 19 Luftdurchtrittsöffnungen 20 vorgesehen, welchen über eine Leitung 21 erwärmte, komprimierte Luft zugeführt wird, sodaß die Förderbänder 9,10 auf einem Luftpolster gleiten.

Die beiden Förderbänder 9,10 sind mit ihren Umlenkrollen 11,12, dem Rahmen 13 und den Hubspindelgetfiebepaaren 14,15 in einer Kammer 22 untergebracht, die an ihrer einen Stirnseite eine Einlaßöffnung 23 für die Verteileinrichtung 6 und an ihrer gegenüberliegenden Stirnseite eine Auslaßöffnung 24 für den verfestigten Formteil aufweist. Außerhalb der Kammer 22 befinden sich Heizeinrichtungen 25 in Form von elektrischen Heizstrahlern, deren Wärmestrahlung über ein wärmestrahlendurchlässiges Fenster 26 aus Glaskeramik in das Innere der Kammer 22 gelangt. Diese Anordnung der Heizeinrichtungen weist den Vorteil auf, daß die Gefahr einer Entzündung explosiver, bei der Verfestigung bzw. Polymerisation im Inneren der Kammer 22 entstehender Gase gebannt ist.

Die Kammer 22 ist im Bereich ihrer beiden Stirnseiten mit Luftöffnungen 27,28 versehen, die über eine außerhalb der Kammer 22 vorgesehene, nicht dargestellte Luftzirkulationsleitung, in der ein Gebläse eingeschaltet ist, in Verbindung stehen. Dadurch wird eine gleichmäßige Warmluftverteilung in der Kammer 22 sichergestellt. Über einen nichtdargestellten Thermofühier in der Kammer 22 können weiters die Heizeinrichtungen 25 geregelt werden.

Das die Kammer 22 umschließende Gehäuse 29 ist über Arme 30 mit dem Sockel 8 schwenkbar und über einen Spindeltrieb 31 in seiner Neigung einstellbar verbunden. Damit kann die Neigung der Förderbänder 9,10 verändert und insbesondere an den jeweils eingestellten Einlaufspalt und damit an die Dicke des herzustellenden Formteiles angepaßt werden. Der Neigungswinkel ist für eine abgedichtete Zufuhr des Kunststoffmateriales in den Einlaufspalt durch die Verteileinrichtung 6 erforderlich. Diese weist ein Rohrsystem 32 auf, das sich über eine Breite des Einlaufspaltes erstreckt, die geringer ist als die Breite des herzustellenden Formteiles. Bei einem größeren Einlaufspalt kann dieses Rohrsystem 32 in den Einlaufspalt hineinragen, ohne die Förderbänder 9,10 zu berühren. Bei einem kleineren Einlaufspalt, wie er bei der Herstellung dünnerer Formteile gegeben ist, ist es nicht möglich, das Rohrsystem 32 in den-Raum zwischen den beiden Förderbändern 9,10 hineinragen zu lassen. In diesem Fall sind, um einen unerwünschten Austritt des flüssigen Kunststoffmateriales im Bereich des Einlaufspaltes zu vermeiden, zur seitlichen Begrenzung des Einlaufspaltes feststehende, vorzugsweise dreieckförmige Dichtungsprofile vorgesehen.

In der Verteileinrichtung 6 sind nicht dargestellte Meßkontakte für die Messung der Menge des dem Einlaufspalt zugeführten flüssigen Kunststoffmateriales vorgesehen. Durch diese Meßkontakte kann das Gießventil 5 derart gesteuert werden, daß bei mit konstanter Geschwindigkeit umlaufenden Förderbändern 9,10 die jeweils in Abhängigkeit von der Größe des Einlaufspaltes für die Herstellung des Kunststoffformteiles erforderliche Menge an flüssigem Kunststoffmaterial zur Verfügung steht. Es kann aber auch eine konstante Menge an flüssigem Kunststoffmaterial durch entsprechende Einstellung des Gießventiles 5 der Verteileinrichtung 6 zugeführt werden, in welchem Fall durch die Meßkontakte die Geschwindigkeit der Förderbänder geregelt wird. Um ein allenfalls im Bereich der Dichtungskörper 16 austretendes flüssiges Kunststoffmaterial abzuführen, sind unterhalb der Längsränder des unteren Förderbandes 10 Auffangrinnen 33 (siehe Fig. 2) vorgesehen, die in einen mit dem Gehäuse 29 der Kammer 22 verbundenen Auffangbehälter 34 münden, von wo das Kunststoffmaterial abgeführt werden kann.

Die kontrollierte Abfuhr der bei der Polymerisation in der Kammer 22 entstehenden Dämpfe erfolgt über ein mit einem Absperrschieber versehenes Abluftrohr 35.

Die Förderbänder 9,10 bestehen aus einem endlos hergestellten Gewebe - oder Kunststoffband, beispielsweise aus einem endlos gewobenen Aramid-Gewebeband, mit einer Beschichtung aus Polytetrafluoräthylen. oder aus einem Silikongummiband, oder sie können auch aus einem an der Stoßstelle stumpf geschweißten Stahlband gebildet sein. In jedem Fall müssen die Förderbänder 9,10 die Mischtemperatur des zugeführten, flüssigen Kunststoffmateriales von etwa 125°C und die bis auf 190°C ansteigende Temperatur des Polymerisates aushalten.

Der aus der Auslaßöffnung 24 austretende, verfestigte Kunststoffformteil wird über einen Rollenabzug 36 abgeführt, der in einem eine Klappe 37 aufweisenden Gehäuse 38 wärmeisoliert untergebracht ist. Durch die geöffnete Klappe 37 wird das Einführen des aus der Auslaßöffnung austretenden Formteiles bei Beginn der Produktion in den Rollenabzug 36 ermöglicht. Im Anschluß an den Rollenabzug 36 ist eine quer zur Vorschubrichtung des Rollenabzuges 36 bewegbare Trenneinrichtung 39 vorgesehen; die den gefertigten, endlosen Formteil in Stücke vorbestimmter Länge unterteilt.

Mit der eben beschriebenen Vorrichtung können plattenförmige Formteile mit variabler Breite und Dicke hergestellt werden.

Die erfindungsgemäße Vorrichtung ermöglicht aber auch die Herstellung von Profilen. In diesem Fall werden, wie aus Fig. 3 hervorgeht, zwischen den beiden Förderbändern 9,10 Formprofile 40 aus Silikongummi angeordnet, die aus zwei Teilen 41, 42 bestehen, welche an ihren Kontaktflächen zur Zentrierung halbkreisförmige Vorsprünge bzw. Ausnehmungen 43 aufweisen. Jeder der beiden Teile 41,42 ist endlos ausgebildet, wobei der Teil 41 mit dem oberen Förderband 9 und der Teil 42 mit dem unteren Förderband 10 mitläuft. Nach Passieren des Einlaufspaltes liegen die beiden Teile 41,42 aneinander an und sind durch die Vorsprünge bzw. Ausnehmungen 43 zentriert, sodaß Hohlräume 44 entsprechend der Form der herzustellenden Profile entstehen, in welchen das Kunststoffmaterial auspolymerisiert. Die Formstücke 40 werden, ebenso wie die Dichtungskörper 16, durch sich an Führungen 18 abstützende Stützbänder 17 in ihrer Lage gehalten.

## Patentansprüche

1. Vorrichtung zum Herstellen von Formteilen aus Kunststoff, beispielsweise von Platten, Profilen od.dgl., mit zwei eine Form bildenden, parallel zueinander und in Abstand voneinander angeordneten umlaufenden Förderbändern (9, 10) und einer in den Einlaufspalt zwischen den Förderbändern (9, 10) mündenden Verteileinrichtung (6), welcher über eine Leitung flüssiges Kunststoffmaterial zugeführt wird, das sich zwischen den umlaufenden Förderbändern (9, 10) zum Formteil verfestigt, **dadurch gekennzeichnet, daß** zumindest zwei jeweils eine Caprolactamschmelze enthaltende Behälter (2) vorgesehen sind, welche über gesonderte Leitungen (4) mit einer vor der Verteileinrichtung (6) vorgesehenen Mischeinrichtung (5) verbunden sind.

2. Vorrichtung nach Anspruch 1, **dadurch gekennzeichnet, daß** die Mischeinrichtung (5) in einem der Verteileinrichtung (6) vorgeschalteten Gießventil (5) vorgesehen ist.

3. Vorrichtung nach Anspruch 1, **dadurch gekennzeichnet, daß** im Bereich der beiden Längsränder wenigstens eines Förderbandes (9,10) ein Dichtungskörper (16) beispielsweise aus Silikongummi, vorgesehen ist.

4. Vorrichtung nach Anspruch 3, **dadurch gekennzeichnet, daß** die Dichtungskörper (16) lose am Förderband (9,10) aufliegen und durch an ihren Außenseiten anliegende Stützbänder (17) in ihrer Lage fixiert sind, welche sich gegen am Förderband (9,10) befestigte Führungen (18), vorzugsweise in Form von Nieten, abstützen

5. Vorrichtung nach Anspruch 1, **dadurch gekennzeichnet, daß** zwischen den beiden Förderbändern (9,10) zweiteilige Formprofile (40), vorzugsweise aus Silikongummi, mit den herzustellenden Profilen entsprechenden Hohlräumen, angeordnet sind, wobei ein Teil (41) auf dem oberen Förderband (9) und ein Teil (42) auf dem unteren Förderband (10) abgestützt ist.

6. Vorrichtung nach einem der Ansprüche 1 bis 5, **dadurch gekennzeichnet, daß** die Verteileinrichtung (6) aus einem in den Einlaufspalt mündenden Rohrsystem (32) besteht.

7. Vorrichtung nach Anspruch 6, **dadurch gekennzeichnet, daß** zur seitlichen Begrenzung des Einlaufspaltes feststehende, vorzugsweise dreieckförmige, Dichtungsprofile vorgesehen sind.

8. Vorrichtung nach einem der Ansprüche 1 bis 7, **dadurch gekennzeichnet, daß** die Verteileinrichtung (6) Meßkontakte für die Messung der Menge des dem Einlaufspalt zugeführten flüssigen Kunststoffmateriales aufweist, wobei die Meßkontakte vorzugsweise mit dem Gießventil (5) in Wirkverbindung stehen.

9. Vorrichtung nach einem der Ansprüche 1 bis 8, **dadurch gekennzeichnet, daß** im Bereich des Einlaufspaltes eine Heizeinrichtung (25), vorzugsweise elektrische Heizstrahler, vorgesehen ist.

10. Vorrichtung nach einem der Ansprüche 1 bis 9, **dadurch gekennzeichnet, daß** die Förderbänder (9,10) in einer Kammer (22) angeordnet sind, die eine an der einen Stirnseite im Bereich der Verteileinrichtung (6) vorgesehene Einlaßöffnung (23) und an der gegenüberliegenden Stirnseite eine Austrittsöffnung (24) für den Formteil bzw. die Formteile aufweist.

11. Vorrichtung nach einem der Ansprüche 1 bis 10, **dadurch gekennzeichnet, daß** die Heizeinrichtung (25) außerhalb der Kammer (22) angeordnet ist und daß die der Heizeinrichtung (25) benachbarte Kammerwand ein wärmestrahlendurchlässiges Fenster (26), beispielsweise aus Glaskeramik, aufweist.

12. , Vorrichtung nach einem der Ansprüche 1 bis 11, **dadurch gekennzeichnet, daß** die Kammer (22) im Bereich der beiden Stirnseiten mit Luftöffnungen (27,28) versehen ist, die über eine außerhalb der Kammer (22) vorgesehene Luftzirkulationsleitung, in der vorzugsweise ein Gebläse eingeschaltet ist, in Verbindung stehen.

13. Vorrichtung nach einem der Ansprüche 1 bis 12, **dadurch gekennzeichnet, daß** unterhalb der Längsränder des unteren Förderbandes (10) Auffangrinnen (33) für austretendes, flüssiges Kunststoffmaterial vorgesehen sind, die in einen mit der Kammer (22) verbundenen Auffangbehälter (34) münden.

14. Vorrichtung nach einem der Ansprüche 1 bis 13, **dadurch gekennzeichnet, daß** die Förderbänder (9,10) auf Tafeln (19), vorzugsweise aus rostfreiem Stahlblech, gleitend abgestützt sind.

15. Vorrichtung nach Anspruch 14, **dadurch gekennzeichnet, daß** die Tafeln (19) mit Luftdurchtrittsöffnungen (20) versehen sind.

16. Vorrichtung nach einem der Anspruche 1 bis 15, **dadurch gekennzeichnet, daß** ein an die Auslaßöffnung (24) der Kammer (22) anschließender Rollenabzug (36) sowie eine quer zur Vorschubeinrichtung des Rollenabzuges (36) bewegbare Trenneinrichtung (39) vorgesehen sind.

17. Vorrichtung nach einem der Ansprüche 1 bis 16, **dadurch gekennzeichnet, daß** die Förderbänder (9,10) aus einem endlos hergestellten Gewebe- oder Kunststoffband bestehen, das vorzugsweise mit einer Beschichtung aus Polytetrafluoräthylen versehen ist.

18. Vorrichtung nach einem der Ansprüche 1 bis 16, **dadurch gekennzeichnet, daß** die Förderbänder (9,10) aus einem an der Stoßstelle stumpf geschweißten Stahlband bestehen.

19. Vorrichtung nach einem der Ansprüche 1 bis 18, **dadurch gekennzeichnet, daß** oberhalb des oberen Förderbandes (9) und/oder unterhalb des unteren Förderbandes (10) eine Abwickeleinrichtung für ein am Förderband (9,10) anliegendes und sich mit dem Förderband mitbewegendes Metallband, beispielsweise eine Aluminiumfolie oder eine Stahlfolie, vorgesehen ist.

20. Vorrichtung nach einem der Ansprüche 1 bis 19, **dadurch gekennzeichnet, daß** wenigstens einer der Behälter (2) mit einer Einrichtung für die Beimengung von Verstärkungsfasern, beispielsweise Glasfasern, Kohlenstofffasern und/oder Aramidfasern, verbunden ist.

## Claims

1. A device for manufacturing moulded parts of plastics material, for example plates, profiles or the like, having two revolving conveyor belts (9, 10), which form a mould and are arranged parallel to one another at a mutual spacing, and a distributing device (6) which leads into the intake gap between the conveyor belts (9, 10) and to which liquid plastics material is supplied by way of a line, said liquid plastics material solidifying between the revolving conveyor belts (9, 10) to form a moulded part, **characterised in that** at least two vessels (2) are provided, which each contain a caprolactam melt and are connected by way of separate lines (4) to a mixing device (5) provided upstream of the distributing device (6).

2. A device according to Claim 1, **characterised in that** the mixing device (5) is provided in a casting valve (5) connected upstream of the distributing device (6).

3. A device according to Claim 1, **characterised in that** a sealing body (16), for example of silicone rubber, is provided in the region of the two longitudinal edges of at least one conveyor belt (9, 10).

4. A device according to Claim 3, **characterised in that** the sealing bodies (16) lie loosely along the conveyor belt (9, 10) and are fixed in position by supporting strips (17) lying against their outer sides, said supporting strips being supported against guides (18), preferably in the form of rivets, which are fixed to the conveyor belt (9, 10).

5. A device according to Claim 1, **characterised in that** two-part mould profiles (40), which are preferably of silicone rubber and have cavities corresponding to the profiles to be manufactured, are arranged between the two conveyor belts (9, 10), one part (41) being supported on the upper conveyor belt (9) and one part (42) being supported on the lower conveyor belt (10).

6. A device according to one of Claims 1 to 5, **characterised in that** the distributing device (6) comprises a pipe system (32) leading into the intake gap.

7. A device according to Claim 6, **characterised in that** fixed, preferably triangular, sealing profiles are provided for laterally delimiting the intake gap.

8. A device according to one of Claims 1 to 7, **characterised in that** the distributing device (6) has measuring contacts for measuring the quantity of the liquid plastics material supplied to the intake gap, the measuring contacts preferably being operatively connected to the casting valve (5).

9. A device according to one of Claims 1 to 8, **characterised in that** a heating device (25), preferably an electric radiant heater, is provided in the region of the intake gap.

10. A device according to one of Claims 1 to 9, **characterised in that** the conveyor belts (9, 10) are arranged in a chamber (22) which has an inlet opening (23) provided at the one end face in the region of the distributing device (6) and an outlet opening (24) at the opposite end face for the moulded part or the moulded parts.

11. A device according to one of Claims 1 to 10, **characterised in that** the heating device (25) is arranged outside the chamber (22) and in that the chamber wall adjacent to the heating device (25) has a heat-radiation permeable window (26), preferably of glass ceramic.

12. A device according to one of Claims 1 to 11, **characterised in that**, in the region of the two end faces, the chamber (22) is provided with air openings (27, 28) which are connected by way of an air-circulation line, which is provided outside the chamber (22) and in which a fan is preferably connected.

13. A device according to one of Claims 1 to 12, **characterised in that** collection channels (33) for escaping liquid plastics material are provided below the longitudinal edges of the lower conveyor belt (10) and lead into a collection vessel (34) connected to the chamber (22).

14. A device according to one of Claims 1 to 13, **characterised in that** the conveyor belts (9, 10) are supported in sliding manner on panels (19), preferably of stainless sheet-steel.

15. A device according to Claim 14, **characterised in that** the panels (19) are provided with air passages (20).

16. A device according to one of Claims 1 to 15, **characterised in that** an extracting roller (36) adjoining the outlet opening (24) of the chamber (22) and a separating device (39) which may be moved transversely with respect to the feed direction of the extracting roller (36) are provided.

17. A device according to one of Claims 1 to 16, **characterised in that** the conveyor belts (9, 10) comprise a fabric or plastics etripwhieh is of a continuous construction and is preferably provided with a coating of polytetrafluoroethylene.

18. A device according to one of Claims 1 to 16, **characterised in that** the conveyor belts (9, 10) comprise a steel strip which is butt-welded at the join.

19. A device according to one of Claims 1 to 18, **characterised in that** a supply device for a metal strip, preferably an aluminium film or a steel film, which lies on the conveyor belt (9, 10) and moves with the conveyor belt, is provided above the upper conveyor belt (9) and/or below the lower conveyor belt (10).

20. A device according to one of Claims 1 to 19, **characterised in that** at least one of the vessels (2) is connected to a. device for admixing reinforcing fibres, for example glass fibres, carbon fibres and/or aramide fibres.

## Revendications

1. Dispositif pour la fabrication de pièces moulées en matière plastique, par exemple de plaques, profilés ou objets similaires, comprenant deux bandes convoyeuses (9, 10) en révolution, formant un moule et agencées parallèlement l'une à l'autre, et à distance l'une de l'autre ; et un système répartiteur (6) débouchant dans l'interstice d'entrée entre les bandes convoyeuses (9, 10) et auquel est délivrée, par l'intermédiaire d'un conduit, une matière plastique liquide se solidifiant entre les bandes convoyeuses (9, 10) en révolution, pour former la pièce moulée, **caractérisé par** le fait qu'il est prévu au moins deux conteneurs (2) renfermant respectivement une masse de capro-lactame en fusion et reliés, par l'intermédiaire de conduits distincts (4), à un système mélangeur (5) prévu avant le système répartiteur (6).

2. Dispositif selon la revendication 1, **caractérisé par** le fait que le système mélangeur (5) est prévu dans une vanne de déversement (5) installée en amont du système répartiteur (6).

3. Dispositif selon la revendication 1, **caractérisé par** le fait qu'un corps d'étanchement (16), consistant par exemple en du caoutchouc siliconé, est prévu dans la région des deux bords longitudinaux d'au moins une bande convoyeuse (9, 10).

4. Dispositif selon la revendication 3, **caractérisé par** le fait que les corps d'étanchement (16) reposent avec jeu sur la bande convoyeuse (9, 10) et sont consignés à demeure, dans leur position, par des rubans d'appui (17) appliqués sur leurs faces extérieures et prenant appui contre des guides (18) fixés à la bande convoyeuse (9, 10) et revêtant, de préférence, la forme de rivets.

5. Dispositif selon la revendication 1, **caractérisé par** le fait que des profils de moule (40) en deux parties, consistant de préférence en du caoutchouc siliconé et munis de cavités correspondant aux profilés à fabriquer, sont interposés entre les deux bandes convoyeuses (9, 10), une partie (41) étant en appui sur la bande convoyeuse (9) supérieure, et une partie (42) étant en appui sur la bande convoyeuse (10) inférieure.

6. Dispositif selon l'une des revendications 1 à 5, **caractérisé par** le fait que le système répartiteur (6) est constitué d'un réseau tubulaire (32) débouchant dans l'interstice d'entrée.

7. Dispositif selon la revendication 6, **caractérisé par** le fait que des profils d'étanchement fixes, de préférence triangulaires, sont prévus pour la délimitation latérale de l'interstice d'entrée.

8. Dispositif selon l'une des revendications 1 à 7, **caractérisé par** le fait que le système répartiteur (6) présente des contacts mesureurs pour mesurer la quantité de la matière plastique liquide délivrée à l'interstice d'entrée, lesdits contacts mesureurs étant de préférence en liaison interactive avec la vanne de déversement (5).

9. Dispositif selon l'une des revendications 1 à 8, **caractérisé par** le fait qu'un système de chauffage (25), consistant de préférence en des radiateurs électriques, est prévu dans la région de l'interstice d'entrée.

10. Dispositif selon l'une des revendications 1 à 9, **caractérisé par** le fait que les bandes convoyeuses (9, 10) sont logées dans une chambre (22) qui comporte un orifice d'admission (23) prévu à l'une des faces extrêmes, dans la région du système répartiteur (6), et, à la face extrême opposée, un orifice de sortie (24) respectivement destiné à la pièce moulée ou aux pièces moulées.

11. Dispositif selon l'une des revendications 1 à 10, **caractérisé par** le fait que le système de chauffage (25) est disposé à l'extérieur de la chambre (22) ; et par le fait que la paroi de ladite chambre, voisine dudit système de chauffage (25), présente une fenêtre (26) perméable aux rayonnements thermiques et consistant, par exemple, en de la vitrocéramique.

12. Dispositif selon l'une des revendications 1 à 11, **caractérisé par** le fait que la chambre (22) est munie, dans la région des deux faces extrêmes, d'orifices (27, 28) de passage d'air qui sont en liaison par l'intermédiaire d'un conduit de circulation d'air, prévu à l'extérieur de ladite chambre (22), et dans lequel une soufflerie est de préférence intégrée.

13. Dispositif selon l'une des revendications 1 à 12, **caractérisé par** le fait que des goulottes réceptrices (33), prévues au-dessous des bords longitudinaux de la bande convoyeuse (10) inférieure et destinées à de la matière plastique liquide sortant, débouchent dans un réceptacle (34) relié à la chambre (22).

14. Dispositif selon l'une des revendications 1 à 13, **caractérisé par** le fait que les bandes convoyeuses (9, 10) sont en appui coulissant sur des panneaux (19) consistant, de préférence, en de la tôle d'acier inoxydable.

15. Dispositif selon la revendication 14, **caractérisé par** le fait que les panneaux (19) sont pourvus d'orifices (20) de passage d'air.

16. Dispositif selon l'une des revendications 1 à 15, **caractérisé par** la présence d'un extracteur (36) à rouleaux, situé dans la continuité directe de l'orifice de sortie (24) de la chambre (22), ainsi que d'un système de séparation (39) mobile transversalement par rapport à la direction d'avance dudit extracteur (36) à rouleaux.

17. Dispositif selon l'une des revendications 1 à 16, **caractérisé par** le fait que les bandes convoyeuses (9, 10) consistent en un ruban de matière plastique ou de tissu fabriqué en continu, préférentiellement muni d'un revêtement en polytétrafluoréthylène.

18. Dispositif selon l'une des revendications 1 à 16, **caractérisé par** le fait que les bandes convoyeuses (9, 10) consistent en un ruban d'acier soudé bord à bord dans la zone de rencontre.

19. Dispositif selon l'une des revendications 1 à 18, **caractérisé par** le fait qu'un système dérouleur est prévu, au-dessus de la bande convoyeuse (9) supérieure et/ou au-dessous de la bande convoyeuse (10) inférieure, pour un ruban métallique, par exemple un feuil d'aluminium ou un feuil d'acier, appliqué sur la bande convoyeuse (9, 10) et mis en mouvement conjointement à ladite bande convoyeuse.

20. Dispositif selon l'une des revendications 1 à 19, **caractérisé par** le fait qu'au moins l'un des conteneurs (2) est relié à un système d'adjonction de fibres de renforcement, par exemple des fibres de verre, des fibres de carbone et/ou des fibres d'aramide.
